Europäisches Patentamt

European Patent Office

Office européen des brevets

(11) Veröffentlichungsnummer: **0 106 255**
**A2**

## (12) EUROPÄISCHE PATENTANMELDUNG

(21) Anmeldenummer: 83109866.0

(22) Anmeldetag: 03.10.83

(51) Int. Cl.³: **H 02 H 7/08**
**H 02 H 5/04**

(30) Priorität: 12.10.82 DE 3237802

(43) Veröffentlichungstag der Anmeldung:
25.04.84 Patentblatt 84/17

(84) Benannte Vertragsstaaten:
AT BE CH DE IT LI NL SE

(71) Anmelder: SIEMENS AKTIENGESELLSCHAFT
Berlin und München Wittelsbacherplatz 2
D-8000 München 2(DE)

(72) Erfinder: Nimes, Karl, Dipl.-Ing.
Paul-Gossen-Strasse 95
D-8520 Erlangen(DE)

(54) Überlastschutz für eine elektrische Maschine mit Kurzschlussläufer gegen zu häufiges Anlassen.

(57) Zur Verhinderung einer Überlastung der Läuferwicklung bei läuferkritischem Betrieb eines Kurzschlußläufermotors durch zu häufiges Einschalten wird der von einer dem Quadrat des gleichgerichteten Ständerstromes entsprechenden Spannung ausgelöste Überlastschutz so ausgebildet, daß die Spannung als Spannungsabfall an einer umschaltbaren Widerstandsanordnung ($R_{H1}$, $R_{H2}$) abgegriffen wird und die Umschaltvorrichtung (U) für die Widerstandsanordnung in Schaltabhängigkeit vom Überschreiten eines bestimmten Mehrfachen des Nennstromes ($J_N$) gebracht ist. Der höhere Widerstand ($R_{H2}$) beim Anlauf der Maschine ist so bemessen, daß bei kalter Maschine drei aufeinanderfolgende Anlaufvorgänge und bei warmer Maschine nur zwei Anlaufvorgänge durchgeführt werden können.

FIG 1

EP 0 106 255 A2

SIEMENS AKTIENGESELLSCHAFT      Unser Zeichen
Berlin und München              VPA 82 P 3317 E

Überlastschutz für eine elektrische Maschine mit Kurzschlußläufer gegen zu häufiges Anlassen

Die Erfindung betrifft einen Überlastschutz für eine elektrische Maschine mit Kurzschlußläufer nach dem Oberbegriff
des Patentanspruchs 1.

Ein Überlastschutz dieser Art kann gemäß DE-AS 11 63 955
im einfachsten Fall mit einem vom Motorstrom oder ihm proportionalen elektrischen Größe beeinflußten Bimetallstreifen oder Bimetallrelais arbeiten oder von der Ladung
eines Kondensators abhängig ausgelöst werden, indem ein
dem Maschinenstrom proportionaler Strom gleichgerichtet
wird und von diesem Gleichstrom nach Quadrierung eine
Spannung abgeleitet wird, die den Kondensator bis zum Auslösewert auflädt. Als Schwellwert für die Auslösung des
Überlastschutzes kann dabei eine Referenzspannung vorgegeben
werden. Darüber hinaus sind verfeinerte elektronische digitale Überlastrelais bekannt, die genauer arbeiten und auf
zusätzliche Kriterien ansprechen.

Ein solcher elektronischer Überlastschutz ist z.B. aus der
"Siemens-Zeitschrift" Heft 8, 50. Jahrgang (1976) Seiten 551
bis 557 bekannt, der als thermisches Abbild der Maschine
über einen Gleichrichter an die Sekundärwicklung eines den
Ständerstrom der Maschine erfassenden Stromwandlers angeschlossen ist. Eine dem Ständerstrom proportionale Spannung
wird einer Quadrierschaltung zugeführt, deren analoger Ausgangswert  der in der Maschine durch die ständer- und läuferseitige Verlustleistung erzeugten Wärmemenge etwa proportional ist. Dieser Ausgangswert wird zur Temperaturnachbildung
einem Analog-Frequenz-Umsetzer zugeführt, der Impulse erzeugt, die eine dem Ausgangswert der Quadrierschaltung pro-

Ot 2 Ca / 29.09.1982

portionale Frequenz haben. Diese Impulse werden dem vorwärtszählenden Eingang eines Speicherzählers zugeführt, dessen Zählerstand durch einen nachgeordneten Digital-Analog-Umsetzer in ein temperaturproportionales Analogsignal umgewandelt wird. Besagtes temperaturabhängiges Analogsignal wird nach Umwandlung in Impulse mit temperaturabhängiger Frequenz durch einen Analog-Frequenz-Umsetzer zur Nachbildung des Einflusses von Kühlmitteln auf den rückwärtszählenden Eingang des Speicherzählers gegeben. Das temperaturabhängige Analogsignal ist ferner über einen Trigger als Schwellwertglied auf einen Überlastauslöser geführt, der bei Überschreiten einer bestimmten Übertemperatur die Abschaltung der Maschine bewirkt. Außerdem wird das temperaturabhängige Analogsignal einem zweiten Trigger als Schwellwertglied zugeführt, der eine Wiedereinschaltsperre beeinflußt, die ein Wiedereinschalten der Maschine erst nach Unterschreiten eines bestimmten Temperaturwertes zuläßt. Damit bei mehrmaligen aufeinanderfolgenden Anlaufvorgängen der Überlastschutz nicht unerwünschterweise eine Abschaltung vornimmt, kann durch Zusatzeinrichtungen eine vorübergehende Erhöhung der Auslösetemperatur in Abhängigkeit vom Anlaufstrom erfolgen.

Während des Betriebes der Maschine sind die Ständer- und Läuferströme $J_1$, $J_2$ praktisch gleich, da die Maschine in der Regel aus Wirtschaftlichkeitsgründen so bemessen ist, daß im Nennbetrieb die Widerstände $R_1$, $R_2$ im Ständer- und Läuferkreis etwa gleich sind, so daß auch die Verluste $P_1$, $P_2$ im Ständer- und Läuferkreis größenordnungsmäßig etwa gleich sind. Somit können die Verluste im Läuferkreis durch die über den Ständerstrom erfaßbaren Verluste im Ständerkreis nachgebildet und in den bekannten Überlastschutzanordnungen mehr oder weniger genau ausgewertet werden.

Bei Normalbetrieb ist die verhältnismäßig große Ständerzeitkonstante für das thermische Verhalten der Maschine

- 3 -     VPA **82 P 3317 E**

maßgeblich. Man kann hier von einem "ständerkritischen" Betrieb der Maschine sprechen, bei der die allein nachbildbare Temperatur des Ständerkreises für die Erfassung der Ständer- und Läuferverluste genügt. Die bekannten Überlastschutzanordnungen für solche Maschinen, die üblicherweise für drei aufeinanderfolgende Anlaufvorgänge aus dem kalten Zustand und für zwei Anlaufvorgänge aus dem warmen Zustand ausgelegt sind, lassen aber weit mehr als drei Anläufe aus kaltem Zustand und weniger als zwei Anläufe aus warmen Zustand zu. Dadurch wird im ersten Fall die Maschine gefährdet und im zweiten Fall der gewünschte Betrieb (Schweranlauf) in Frage gestellt. Darüber hinaus besteht bei den bekannten Überlastschutzanordnungen keine Anzeigemöglichkeit, ob und wann nach einer gerade zulässigen Anzahl von Anlaufvorgängen ein weiterer Anlaufvorgang erfolgen darf.

Das vorgenannte unzureichende Verhalten der bekannten Überlastschutzanordnungen bei solchen Anlaufvorgängen beruht auf der der Erfindung zugrundeliegenden Erkenntnis, daß die vorausgesetzte praktische Gleichheit von Ständer- und Läuferverlusten bei Anlaufvorgängen nicht gegeben ist. Die wesentlich größeren, untereinander etwa gleichgroßen Anlaufströme im Ständer- und Läuferkreis $J_{1A} \approx J_{2A} = J_A$ ergeben nämlich wegen des beim Anlauf wirksamen Stromverdrängungseffektes im Läufer mit um einen Widerstandsfaktor $C_1 > 1$ wesentlich größeren Läuferwiderstand $R_2 = C_1 R_1$ eine entsprechend höhere thermische Belastung des Läufers als des Ständers, da $P_{1A} = J_{1A}^2 \cdot R_1 = J_A^2 \cdot R_1$ merklich kleiner ist als $P_{2A} = J_{2A}^2 \cdot R_2 = J_A^2 \cdot C_1 R_1 = C_1 \cdot P_{1A}$.

Bei solch "läuferkritischem" Betrieb wird also der Läuferkreis thermisch vor dem Ständerkreis überlastet, obwohl die maximal zulässige Temperatur $\vartheta_2$ des Läufers höher als die maximal zulässige Temperatur $\vartheta_1$ des Ständers ist, wobei gilt $\vartheta_2 = C_2 \cdot \vartheta_1$ mit dem Temperaturfaktor $C_2 > 1$.

Der Erfindung liegt die Aufgabe zugrunde, einen Überlastschutz der eingangs genannten Art gegen zu häufiges Anlassen so auszubilden, daß er nicht nur im "ständerkritischen" Betrieb, sondern auch im "läuferkritischen" Betrieb einen sicheren Schutz der Maschine gegen thermische Überlastung bei Einhaltung einer bestimmten Zahl von Anlaufvorgängen ermöglicht.

Die Lösung der gestellten Aufgabe gelingt entweder durch die kennzeichnenden Maßnahmen des Patentanspruches 1 oder durch die kennzeichnenden Maßnahmen des Patentanspruches 3. Vorteilhafte Ausgestaltungen der Erfindung sind Gegenstand zusätzlicher Patentansprüche.

In der Zeichnung sind für beide Lösungen bei digitalem elektronischen Überlastschutz je ein vereinfacht dargestelltes Ausführungsbeispiel gezeigt und nachfolgend näher erläutert. Es zeigen

Fig. 1 ein stark vereinfachtes Schaltungschema für eine angepaßte Ständerstromauswertung,

Fig. 2 ein Zeit-Temperatur-Diagramm für die Schaltung nach Fig. 1,

Fig. 3 ein Schaltungsschema mit zwei unterschiedlich eingestellten Wiedereinschaltsperren,

Fig. 4 ein Zeit-Temperatur-Diagramm für die Schaltung nach Fig. 3.

Der elektronische Überlastschutz enthält ein Quadrierglied 1 für die dem Ständerstrom $J_1$ bei laufender Maschine proportionale Spannung, einen nachgeordneten Analog-Digital-Umsetzer 2 für die Bildung von Impulsen mit verlustabhängiger Frequenz, einen Speicherzähler 3 mit Vorwärts-Zähleingang für die besagten Impulse und Rückwärts-Zähleingang für Impulse mit temperaturabhängiger Frequenz am Ausgang eines Analog-Digital-Umsetzers 4, der vom temperaturabhängigen analogen Ausgangssignal eines an den Ausgang des Speicherzählers 3 angeschlossenen Digital-Analog-Umsetzers 5 gespeist wird, wobei das analoge Ausgangssignal noch einem Schwellwertglied 6 eines Überlastauslösers J und dem Schwellwertglied 8 einer Wiedereinschaltsperre 9 zugeführt ist.

Dem Quadrierglied 1 wird von einem an Masse gelegten Gleichrichter GR1 aus einer Sekundärwicklung eines Stromwandlers SW im Ständerkreis der Maschine M eine Spannung zugeführt, die als Spannungsabfall an jeweils einem Widerstand $R_{H1}$ bzw. $RH_2$ auftritt.

Dem Quadrierglied 1 wird während des normalen Betriebes ein dem betreffenden Ständerstrom $J_1$ proportionaler Spannungsabfall am Widerstand $R_{H1}$ zugeführt. Beim Anlauf der Maschine tritt ein erhöhter Anlaufstrom $J_{1A}$ im Ständer und $J_{2A}$ im Läufer auf ($J_{1A} \approx J_{2A}$), der wegen der Stromverdrängung im Läufer dort eine höhere Verlustleistung $P_{2A}$ als im Ständer ($P_{1A}$) bewirkt, die durch einen erhöhten Spannungsabfall am Eingang des Quadriergliedes 1 berücksichtigt wird. Hierzu wird vom Widerstand $R_{H1}$ auf einen größeren Widerstand $R_{H2}$ umgeschaltet durch einen Umschalter U, der über ein Schwellwertglied 10 von einem ständerstromabhängigen Gleichspannungsabfall an einem Widerstand R betätigt wird bei Überschreiten einer z.B. den dreifachen Nennstrom übersteigenden Anlaufstrom und der bei beendetem Anlauf wieder auf den Widerstand $R_{H1}$ zurückgeschaltet wird.

Die umschaltbaren Widerstände $R_{H1}$, $R_{H2}$ sind dabei mit beiden Gleichstrompolen des Gleichrichters GR1 verbindbar und mit Masse verbunden. Die Widerstandswerte von $R_{H1}$ und $R_{H2}$ verhalten sich wie $C_1/C_2 > 1$. Das Verhältnis $C_1/C_2$ als Erhöhungsfaktor der eingegebenen Verluste kann vom Strom empirisch ermittelt werden. Der Schwellwert des Schwellwertgliedes 10 ist durch den Widerstand R auf einen Wert eingestellt, der größer als der dreifache Nennstrom ist. Der Widerstand R wird hierzu über einen Gleichrichter GR2 von einer gesonderten Sekundärwicklung des Stromwandlers SW gespeist.

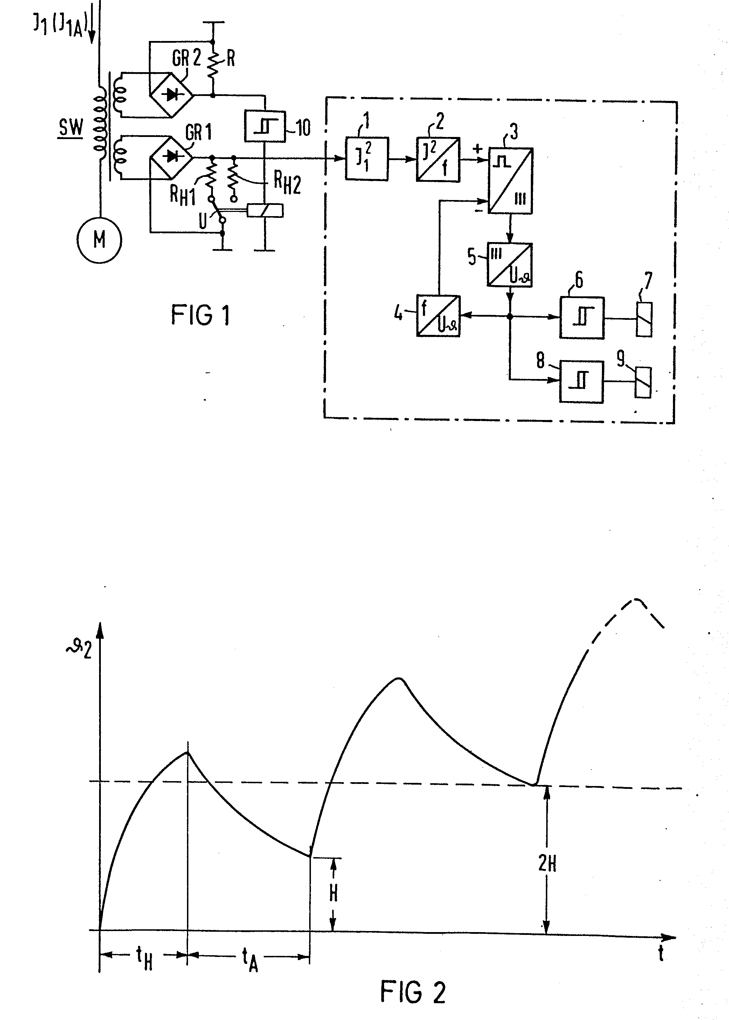

In Fig. 2 ist in der Ordinate die Läufertemperatur $\vartheta_2$ und in der Abszisse die Zeit aufgetragen. Jeder Anlaufvorgang dauert im Hochlauf $t_N$ und im Auslauf $t_A$ und erhöht jedesmal die Temperatur aus dem kalten oder warmen Zustand um den gleichen Temperaturhub H. Beim dargestellten Fall einer zulässigen dreimaligen Anlaufserie aus dem kalten Zustand ist für die Wiedereinschaltsperre 8, 9 ein Mindesttemperaturanstieg von 2 x H als Sperrtemperatur nach zwei Anläufen gewählt, damit der dritte Anlauf noch möglich ist; wobei die Temperaturgrenze unter 3 x H liegt. Nach dem Anlauf steigt die Maschinentemperatur mit einer e-Funktion bis nahe unter die Auslösetemperatur bei Überlastung an.

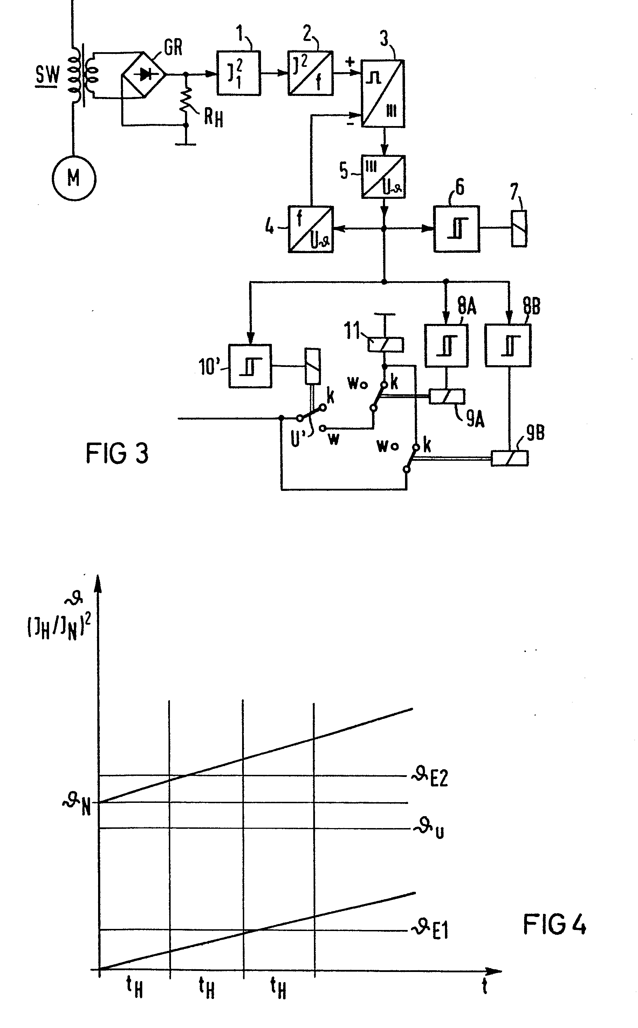

Statt der Umschaltung auf einen höheren Widerstand $R_{H2}$ kann gemäß Fig. 3 auch eine Umschaltung von einer ersten Wiedereinschaltsperre mit niedrigerer Ansprechtemperatur auf eine zweite Wiedereinschaltsperre mit höherer Ansprechtemperatur vorgesehen werden. Auf diese Weise kann der nur für den ständerkritischen Bereich thermisch nachgebildete Überlastschutz auch bei läuferkritischem Anfahrbetrieb einwandfrei arbeiten.

Die thermische Nachbildung der Maschine M erfolgt wiederum ständerseitig durch einen Stromwandler SW zur Speisung eines Gleichrichters GR, an dessen Gleichpole ein Widerstand $R_H$ angeschlossen und mit Masse verbunden ist. Der am Widerstand $R_H$ auftretende, dem Ständerstrom proportionale Spannungsabfall wird wiederum einem Quadrierglied 1 zugeführt. Die nachgeordneten Schaltungselemente 2 bis 7 entsprechen denen der Fig. 1.

An dem Ausgang des Digital-Analog-Umsetzers 5 mit temperaturabhängiger Ausgangsspannung $U_\vartheta$ sind ferner noch zwei Wiedereinschaltsperren 8A, 9A und 8B, 9B parallel zu einem Trigger 10' als Schwellwertglied für einen Umschalter U' angeschlossen, dessen Umschaltkontakt im kalten Zustand der Maschine in der Trennstellung k liegt. Bei Erreichen einer aus Fig. 4 entnehmbaren Umschalttemperatur $\vartheta_u$ wird eine Umschaltung auf die Kontaktstellung w vorgenommen, wobei der Einfluß der ersten Wiedereinschaltsperre 8A, 9A auf ein Einschaltschütz 11 der Maschine M eliminiert wird und stattdessen der Einfluß der zweiten Wiedereinschaltsperre 8B, 9B auf das Einschaltschütz 11 vorbereitet wird. Hierzu schließen die Ruhekontaktlagen k beider Wiedereinschaltsperren das Einschaltschütz 11 an einen Speisestromkreis, und zwar die erste Wiedereinschaltsperre über den Umschaltkontakt des Umschalters U' und die zweite Wiedereinschaltsperre direkt.

Aus Fig. 4, in der die Anlaufzeit vernachlässigt ist, spricht die erste Wiedereinschaltsperre 8A, 9A bei unbetätigtem Umschalter U' (Kontaktstellung k) erst bei Erreichen der Sperrtemperatur $\vartheta_{E1}$ an, so daß drei Anläufe bei kalter Maschine möglich sind, da das Einschaltschütz 11 an Spannung bleibt.

Die laufende Maschine überschreitet vor der Temperatur $\vartheta_N$ bei Nennbetrieb die Umschalttemperatur $\vartheta_u$ für den Umschal- ter U'. Wird die warme Maschine ausgeschaltet und oberhalb der Umschalttemperatur $\vartheta_u$ wieder eingeschaltet, so wird die zweite Wiedereinschaltsperre nach dem zweiten Anlauf bei Erreichen ihrer Sperrtemperatur $\vartheta_{E2}$ ihren Kontakt in die Stellung w bringen, womit das Einschaltschütz stromlos wird und somit ein weiterer Anlauf nicht mehr möglich ist. Die erreichten Temperaturen der Maschine sind dabei im Verhältnis des Hochlaufstromes $J_H$ zum Nennstrom $J_N$ in Fig. 4 angegeben.

Unterhalb der Umschalttemperatur $\vartheta_u$ wird die Maschine als "kalt", oberhalb dieser Temperatur als "warm" betrachtet.

Der Vorteil dieser Schaltung besteht darin, daß die Maschine bei zu häufigem Anlassen hintereinander nicht während des

0106255

- 8 -     VPA 82 P 3317 E

Anlaufvorganges bei entsprechend höherem Anlaufstrom abgeschaltet werden muß und daß die zulässige Zahl der Anlaufvorgänge einschränkungslos ausgeführt werden kann.

Bei etwa festgebremsten Läufer übernimmt den Schutz der
Maschine eine bekannte Anlaufstrom-Zeit-Überwachung, die
aber entfallen kann, wenn unter Beibehaltung der zulässigen
Anlaufvorgänge eine der Festbremszeit entsprechende Zeit-
konstante eingestellt wird.

5 Patentansprüche
4 Figuren

0106255

<u>Patentansprüche</u>

1. Überlastschutz für eine elektrische Maschine mit Kurzschlußläufer gegen zu häufiges Anlassen, der von einer dem Quadrat des gleichgerichteten Ständerstromes abhängigen Spannung bei Erreichen eines bestimmten Wertes derselben auslöst, d a d u r c h   g e k e n n z e i c h n e t , daß die Spannung als Spannungsabfall an einer umschaltbaren Widerstandsanordnung ($R_{H1}$, $R_{H2}$) abgreifbar ist und hierzu eine Umschaltvorrichtung (U) in Schaltabhängigkeit vom Überschreiten eines bestimmten Mehrfachen des Nennstromes ($J_N$) gebracht ist, wobei der bei der beim Anlauf der Maschine wirksame höhere Widerstand ($R_{H2}$) um einen Überhöhungsfaktor größer EINS gegenüber dem bei Normalbetrieb wirksamen niedrigeren Widerstand ($R_{H1}$) bemessen ist, so daß bei kalter Maschine drei und bei warmer Maschine zwei aufeinanderfolgende Anlaufvorgänge durchführbar sind.

2. Überlastschutz nach Anspruch 1, d a d u r c h   g e k e n n z e i c h n e t , daß die Umschaltvorrichtung (U) in Reihe mit einem Schwellwertglied (10) an einem Widerstand (R) angeschlossen ist, der über einen Gleichrichter (GR2) von einer gesonderten Sekundärwicklung eines den Überlastschutz beeinflussenden Stromwandlers (SW) im Ständerkreis der Maschine (M) gespeist ist und daß die Widerstandsanordnung ($R_{H1}$, $R_{H2}$) in Reihe mit der Umschaltvorrichtung (U) über einen eigenen Gleichrichter (GR1) an eine gesonderte Sekundärwicklung des Stromwandlers (SW) angeschlossen ist.

3. Überlastschutz für eine elektrische Maschine mit Kurzschlußläufer gegen zu häufiges Anlassen, der von einer dem Quadrat des gleichgerichteten Ständerstromes abhängigen Spannung bei Erreichen eines bestimmten Wertes derselben auslöst und Überlastauslöser und Wiedereinschaltsperren betätigt, d a d u r c h   g e k e n n z e i c h n e t , daß zwei auf unterschiedliche Temperaturen eingestellte Wiedereinschaltsperren vorgesehen sind, die über ein auf eine dazwischenliegende Umschalttemperatur einstellbaren Umschalter wahlweise ein Einschaltschütz für die Maschine an Spannung legen, so daß bei kalter Maschine drei und bei warmer Maschine zwei aufeinanderfolgende Anläufe durchführbar sind.

4. Überlastschutz nach Anspruch 3, d a d u r c h   g e - k e n n z e i c h n e t , daß aus der abgeleiteten quadrierten Spannung ein verlustproportionales Analogsignal abgeleitet ist, das in Impulse mit verlustproportionaler Frequenz umgewandelt und in einem Speicherzähler (3) in Vorwärts-Zählrichtung gespeichert und der digitale Zählerstand in ein temperaturproportionales Analogsignal umgewandelt wird, das einen Überlastauslöser (6, 7) und zwei Wiedereinschaltsperren (8A, 9A; 8B, 9B) beeinflußt und außerdem nach Umwandlung in Impulse mit temperaturabhängiger Frequenz dem Speicherzähler in Rückwärts-Zählrichtung zugeführt ist und daß die beiden Wiedereinschaltsperren über einen auf die Umschalttemperatur ($\vartheta_u$) einstellbaren Umschalter (U', 10') wahlweise das Einschaltschütz (11) einschalten.

5. Überlastschutz nach Anspruch 4, d a d u r c h   g e - k e n n z e i c h n e t , daß das temperaturproportionale Analogsignal ($U_\vartheta$) an parallelgeschalteten Schwellwertgliedern (10', 8A, 8B) für den Umschalter (U') sowie die Wiedereinschaltsperren (9A, 9B) anliegt und der Schaltkontakt der einen Wiedereinschaltsperre (9A) in Reihe mit dem Schaltkontakt der anderen Wiedereinschaltsperre (9B) parallel zu dieser Reihenschaltung im Stromkreis des Einschaltschützes (11) liegt.

FIG 1

FIG 2

FIG 3

FIG 4